# EUROPÄISCHE PATENTSCHRIFT

(11) **EP 3 017 356 B1**
(45) Veröffentlichungstag und Bekanntmachung des Hinweises auf die Patenterteilung: **10.04.2019**
(21) Anmeldenummer: 14707355.5
(22) Anmeldetag: 21.02.2014
(51) Int. Cl.: G06F 3/0482

(54) **VERFAHREN UND VORRICHTUNG ZUM AUSWÄHLEN EINES OBJEKTS EINER LISTE**
METHOD AND DEVICE FOR SELECTING AN OBJECT FROM A LIST
PROCÉDÉ ET DISPOSITIF DE SÉLECTION D'UN OBJET D'UNE LISTE

(30) Priorität: 02.05.2013 DE 102013007576
(43) Veröffentlichungstag der Anmeldung: 11.05.2016
(73) Patentinhaber: Volkswagen Aktiengesellschaft, 38440 Wolfsburg (DE)
(72) Erfinder: LOU, Jian, 10707 Berlin (DE); BUDZYNSKI, Tobias, 13503 Berlin (DE); KUHN, Mathias, 14129 Berlin (DE)
(86) Internationale Anmeldenummer: PCT/EP2014/053418
(87) Internationale Veröffentlichungsnummer: WO 2014/177297

(56) Entgegenhaltungen:
- WO-A2-2009/143076
- DE-A1-102010 022 721
- DE-U1-202013 000 751
- US-A1- 2010 153 844
- US-A1- 2010 211 872
- US-A1- 2011 296 351

## Beschreibung

Die vorliegende Erfindung betrifft ein Verfahren zum Auswählen eines Objekts einer Liste. Bei dem Verfahren wird auf einer Anzeigefläche eine Teilmenge einer Liste mittels graphischer Objekte angezeigt. Den graphischen Objekten sind zumindest zum Teil jeweils Funktionen zugeordnet. Die Liste wird als Stapel dargestellt, bei dem ein erstes graphisches Objekt oben auf dem Stapel vollständig sichtbar ist und weitere graphische Objekte perspektivisch hinter dem ersten graphischen Objekt nur teilweise sichtbar dargestellt sind. Durch einen Auswahl-Bedienvorgang wird eines der weiteren graphischen Objekte ausgewählt. Dabei verschwindet, wenn ein Auswahl-Bedienvorgang erfasst worden ist, zumindest das erste, oben auf dem Stapel dargestellte graphische Objekt, so dass eines der weiteren graphischen Objekte nach dem Verschwinden des ersten graphischen Objekts oben auf dem Stapel dargestellt wird. Dieses Objekt wird automatisch ausgewählt, so dass die diesem graphischen Objekt zugeordnete Funktion ausgeführt wird.

Ferner betrifft die Erfindung eine Vorrichtung zum Auswählen eines Objekts einer Liste mit einer Anzeigevorrichtung mit einer Anzeigefläche. Die Vorrichtung weist ferner einen Speicher zum Speichern einer Liste auf, die eine Vielzahl von graphischen Objekten umfasst, die zumindest zum Teil auf der Anzeigefläche anzeigbar sind, und zum Speichern von Funktionen, die den graphischen Objekten zugeordnet sind. Die Vorrichtung umfasst des Weiteren eine Steuervorrichtung, die mit der Anzeigevorrichtung gekoppelt ist und mit welcher die auf der Anzeigefläche wiedergegebene Anzeige so steuerbar ist, dass eine Teilmenge der Liste mittels graphischer Objekte anzeigbar ist. Die Liste wird dabei als Stapel dargestellt, bei dem ein erstes graphisches Objekt oben auf dem Stapel vollständig sichtbar ist und weitere graphische Objekte perspektivisch hinter dem ersten graphischen Objekt nur teilweise sichtbar dargestellt sind. Des Weiteren umfasst die Vorrichtung eine Bedieneinrichtung, die von einem Nutzer betätigbar ist, um durch einen Auswahl-Bedienvorgang eines der weiteren graphischen Objekte auszuwählen. Dabei umfasst die Bedieneinrichtung eine Gestenerfassungseinrichtung, wobei mittels der Steuervorrichtung die Anzeigefläche so ansteuerbar ist, dass, wenn ein Auswahl-Bedienvorgang erfasst worden ist, zumindest das erste, oben auf dem Stapel dargestellte graphische Objekt verschwindet, so dass eines der weiteren graphischen Objekte nach dem Verschwinden des ersten graphischen Objekts oben auf dem Stapel dargestellt wird, und dieses graphische Objekt automatisch ausgewählt wird, so dass die diesem graphischen Objekt zugeordnete Funktion ausgeführt wird.

In einem Fahrzeug werden herkömmlicherweise verschiedene Informationen angezeigt, die insbesondere betriebsbezogene Daten des Fahrzeugs für den Fahrer visuell darstellen. Des Weiteren können in dem Fahrzeug für den Fahrer verkehrsbezogene Daten dargestellt werden. Für die Anzeige dieser Informationen wurden früher analoge mechanische Anzeigeinstrumente verwendet. Diese waren insbesondere innerhalb des so genannten Kombiinstruments in der Nähe des primären Sichtfelds des Fahrers hinter dem Lenkrad angeordnet. Das Kombiinstrument dient insbesondere der Anzeige der Geschwindigkeit, des Tankinhalts, der Kühlertemperatur und anderer betriebsbezogener Informationen des Fahrzeugs.

Mit der Zunahme elektronischer Einrichtungen im Fahrzeug wurde es erforderlich, eine größere Informationsmenge im Fahrzeug darzustellen. Moderne Fahrzeuge umfassen beispielsweise eine Vielzahl von Fahrerassistenzsystemen, deren Informationen im Fahrzeug angezeigt werden müssen. Des Weiteren umfassen Fahrzeuge vielfach ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle, und Einrichtungen zur Wiedergabe von Musik und Sprache. Auch für diese Anwendungen muss in dem Fahrzeug die Möglichkeit bestehen, Informationen anzuzeigen.

Aus diesem Grund werden in Fahrzeugen Multifunktionsbediensysteme eingesetzt, welche eine oder mehrere Multifunktionsanzeige(n) und Bedienelemente umfassen, mit denen die vielfältigen im Fahrzeug enthaltenen Einrichtungen bedient werden können. Die Bedienung wird dabei durch die auf der Multifunktionsanzeige wiedergegebene Information unterstützt bzw. geführt. Ferner kann über das Bediensystem ausgewählt werden, welche Informationen auf der Multifunktionsanzeige angezeigt werden sollen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Für die Anzeige von Information in einem Fahrzeug und für die Bedienung der vielfältigen Einrichtungen des Fahrzeugs ergeben sich sehr spezielle Anforderungen. Die Informationsaufnahme und die Bedienung erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Gleichermaßen sollte die Bedienung der Fahrzeugeinrichtungen so einfach und intuitiv wie möglich durchführbar sein, so dass der Fahrer die Einrichtungen auch während der Fahrt bedienen kann. Wird die Bedienung von einer Anzeige unterstützt oder geführt, sollte die Anzeige so erfolgen, dass der Fahrer für die Bedienung nur sehr kurz die Anzeige betrachten muss, um die Bedienung durchzuführen.

Bei der Darstellung von Information in einem Fahrzeug kommt der Darstellung und Bedienung von in Listen geordneter Information eine besondere Bedeutung zu. Aufgrund der relativ kleinen Anzeigefläche der Anzeigevorrichtungen in einem Fahrzeug wird nur eine Teilmenge einer Liste im Fahrzeug angezeigt. Durch einen Bedienvorgang kann der Nutzer einen Bildlauf (scrollen) hervorrufen, um die dargestellte Teilmenge zu verändern. Ferner können Listeneinträge bzw. Objekte der Liste ausgewählt werden, um die Ausführung einer zugeordneten Funktion zu initiieren. Die Bedienvorgänge, die in Zusammenhang mit der Bedienung von Listen stehen, sollten sehr einfach und schnell beispielsweise vom Fahrer des Fahrzeugs ausführbar sein.

Verfahren und Vorrichtungen zum Anzeigen von in Listen geordneter Information und zum Bedienen solcher Listen in einem Fahrzeug sind in folgenden Veröffentlichungen beschrieben: DE 10 2008 051 051 A1, DE 10 2008 052 485 A1, DE 10 2009 019 560 A1 und DE 10 2009 019 563 A1.

Die US 2010/0211872 A1 beschreibt eine Benutzer-Anwendungs-Schnittstelle, bei der verschiedenen Anwendungen Kartenstapel zugeordnet sind, deren einzelne Karten wiederum Inhalten der jeweiligen Anwendung zugeordnet sind. Der Benutzer kann die Karten eines Stapels durchblättern oder zu einem anderen Stapel wechseln. Anhand der im Vordergrund angezeigten, obersten Karte eines Stapels kann eine Funktion der zugeordneten Anwendung konfiguriert oder aufgerufen werden.

In der US 2011/0296351 A1 wird eine Bedienoberfläche mit einer Vielzahl von übereinander in einem Stapel angeordneten Objekten beschrieben. Gesten können als Bedienhandlungen zum Scrollen verwendet werden oder um ein Objekt weiter in den Vordergrund zu rücken.

In der DE 10 2010 022 721 A1 wird ein Verfahren zum Anzeigen von Informationen beschrieben, bei dem ein Stapel von Objekten angezeigt wird und durch eine Eingabe ein bestimmtes Objekt in den Vordergrund gebracht werden kann. Um ein bestimmtes Objekt an die oberste Position im Stapel zu bringen, wird eine Schaltfläche so lange berührt, bis das Objekt in gegebenenfalls mehreren Schritten an die oberste Position gerückt ist. Repräsentiert das Objekt beispielsweise einen Musiktitel, so kann dieser durch Berühren des Objekts gespielt werden.

Es ist die Aufgabe der vorliegenden Erfindung, ein Verfahren und eine Vorrichtung der eingangs genannten Art bereitzustellen, bei denen einfach und schnell das Ausführen einer Funktion eines bestimmten Objekts einer Liste initiiert werden kann und der Nutzer sich leicht in der Listendarstellung orientieren kann.

Diese Aufgabe wird erfindungsgemäß durch ein Verfahren mit den Merkmalen des Anspruchs 1 und eine Vorrichtung mit den Merkmalen des Anspruchs 5 gelöst. Vorteilhafte Aus- und Weiterbildungen ergeben sich aus den abhängigen Ansprüchen.

Das erfindungsgemäße Verfahren ist dadurch gekennzeichnet, dass durch einen Bildlauf-Bedienvorgang ein anderes graphisches Objekt oben auf den Stapel zur Darstellung gebracht wird und nach dem Bildlauf-Bedienvorgang das oben auf dem Stapel dargestellte graphische Objekt markiert ist. Bei einer Markierung eines graphischen Objekts werden Zusatzinformationen zu diesem graphischen Objekt angezeigt, die dem Objekt zugeordnete Funktion wird jedoch nicht ausgeführt. Dabei kann die dem markierten Objekt zugeordnete Funktion durch einen weiteren Bedienvorgang ausgeführt werden. Der Auswahl-Bedienvorgang umfasst eine Wischgeste, die eine horizontale Bewegung einer Hand oder eines Fingers des Nutzers ist, und der Bildlauf-Bedienvorgang umfasst eine Wischgeste, bei welcher der Nutzer eine Wischbewegung von oben nach unten oder von unten nach oben ausführt.

Durch den Auswahl-Bedienvorgang des erfindungsgemäßen Verfahrens kann der Nutzer somit zum einen die angezeigte Teilmenge der Liste verändern, da das ursprünglich oben auf dem Stapel dargestellte graphische Objekt verschwindet und ein anderes graphisches Objekt oben auf dem Stapel und ggf. andere graphische Objekte perspektivisch hinter diesem Objekt nur teilweise sichtbar dargestellt werden. Zum anderen wird nicht nur die angezeigte Teilmenge der Liste verändert, sondern auch automatisch die Ausführung der Funktion eines bestimmten graphischen Objekts initiiert.

Durch den Auswahl-Bedienvorgang wird insbesondere das ursprünglich oben auf dem Stapel dargestellte graphische Objekt zum Verschwinden gebracht und das nächste ursprünglich direkt unter dem obersten graphischen Objekt dargestellte graphische Objekt wird zur Anzeige oben auf dem Stapel gebracht. Alternativ werden mehrere oben auf dem Stapel dargestellte graphische Objekte durch den Auswahl-Bedienvorgang zum Verschwinden gebracht. Die Anzahl der graphischen Objekte, die durch den Auswahl-Bedienvorgang zum Verschwinden gebracht werden, kann beispielsweise vorab festgelegt werden. Es können dann durch den Auswahl-Bedienvorgang die obersten zwei, drei, vier oder sechs graphischen Objekte zum Verschwinden gebracht werden. Weiterhin wird, wenn ein Auswahl-Bedienvorgang erfasst worden ist, eine Animation angezeigt, bei der das erste, oben auf dem Stapel dargestellte graphische Objekt zunächst von dem Stapel weg bewegt wird und dann verschwindet. Durch eine solche Animation kann der Betrachter das Verschwinden des graphischen Objekts intuitiv erfassen, so dass er sich leicht in der Darstellung der Liste orientieren kann.

Der Auswahl-Bedienvorgang umfasst eine Wischgeste, die vor der Anzeigefläche oder auf einer berührungsempfindlichen Oberfläche der Anzeigefläche ausgeführt wird. Die Wischgeste kann von der Hand oder einem Finger eines Nutzers ausgeführt werden. Sie ist eine horizontale Bewegung der Hand oder des Fingers des Nutzers, die vor oder auf einer berührungsempfindlichen Oberfläche der Anzeigefläche ausgeführt wird. Diese Wischgeste wird von einer Gestenerfassungseinrichtung erfasst und in die veränderte Anzeige auf der Anzeigefläche umgesetzt. Ferner wird die erfasste Wischgeste in ein Steuersignal umgesetzt, welches die Ausführung der Funktion des Objekts initiiert, welches nun oben auf dem Stapel dargestellt wird.

Gemäß einer weiteren Ausgestaltung des erfindungsgemäßen Verfahrens wird die Möglichkeit des Ausführens des Auswahl-Bedienvorgangs durch ein Symbol oder Hinweisobjekt signalisiert, dass auf der Anzeigefläche dargestellt wird. Durch dieses Symbol bzw. Hinweisobjekt erreicht man, das der Benutzer die Möglichkeit dieses speziellen Bedienvorgangs schnell und intuitiv erfassen kann.

Erfindungsgemäß wird durch einen Bildlauf-Bedienvorgang ein anderes graphisches Objekt oben auf den Stapel zur Darstellung gebracht. Nach dem Bildlauf-Bedienvorgang ist das oben auf dem Stapel dargestellte graphische Objekt markiert.

Bei dem erfindungsgemäßen Verfahren sind somit zwei verschiedene Bedienvorgänge definiert. Bei beiden Bedienvorgängen wird ein anderes graphisches Objekt oben auf dem Stapel zur Anzeige gebracht. Bei dem Auswahl-Bedienvorgang wird jedoch das nach dem Bedienvorgang oben auf dem Stapel dargestellte Objekt automatisch ausgewählt, so dass die diesem graphischen Objekt zugeordnete Funktion ausgeführt wird. Bei dem Bildlauf-Bedienvorgang kommt es hingegen nicht zur Ausführung der zugeordneten Funktion dieses Objekts. Das Objekt wird jedoch markiert dargestellt. Bei einer solchen Markierung werden Zusatzinformationen zu diesem graphischen Objekt angezeigt. Die dem Objekt zugeordnete Funktion wird jedoch nicht ausgeführt. Durch diese beiden Bedienvorgänge kann der Nutzer vorteilhafterweise einfach und schnell bestimmen, ob er nur einen Bildlauf durch die graphischen Objekte der Liste erzeugen will oder ob er mit einem einzigen Auswahl-Bedienvorgang unmittelbar eine Funktion auslösen will.

Die erfindungsgemäße Vorrichtung ist dadurch gekennzeichnet, dass mittels der Steuervorrichtung die Anzeigefläche ferner so ansteuerbar ist, dass durch einen Bildlauf-Bedienvorgang ein anderes graphisches Objekt oben auf den Stapel zur Darstellung gebracht wird und nach dem Bildlauf-Bedienvorgang das oben auf dem Stapel dargestellte graphische Objekt markiert ist. Bei einer Markierung eines graphischen Objekts werden Zusatzinformationen zu diesem graphischen Objekt angezeigt, die dem Objekt zugeordnete Funktion wird jedoch nicht ausgeführt. Dabei ist die dem markierten Objekt zugeordnete Funktion durch einen weiteren Bedienvorgang ausführbar. Dabei umfasst der Auswahl-Bedienvorgang eine Wischgeste, die eine horizontale Bewegung einer Hand oder eines Fingers des Nutzers ist, und der Bildlauf-Bedienvorgang umfasst eine Wischgeste, bei welcher der Nutzer eine Wischbewegung von oben nach unten oder von unten nach oben ausführt.

Die erfindungsgemäße Vorrichtung ist insbesondere so ausgestaltet, dass sie die vorstehend beschriebenen Verfahrensschritte teilweise oder vollständig ausführen kann. Die Vorrichtung weist somit auch dieselben Vorteile wie das Verfahren auf.

Gemäß einer Ausgestaltung der erfindungsgemäßen Vorrichtung umfasst die Bedieneinrichtung eine berührungsempfindliche Oberfläche. Die berührungsempfindliche Oberfläche kann auf der Anzeigefläche oder getrennt von dieser Anzeigefläche angeordnet sein. Es wird somit entweder ein sogenannter Touchscreen oder ein sogenannter Touchpad bereitgestellt.

Gemäß einer weiteren Ausgestaltung der erfindungsgemäßen Vorrichtung ist, wenn ein Auswahl-Bedienvorgang erfasst worden ist, eine Animation anzeigbar, bei der das erste, oben auf dem Stapel darstellbare graphische Objekt zunächst vom Stapel weg bewegbar ist dann verschwindet.

Erfindungsgemäß umfasst die Bedieneinrichtung eine Gestenerfassungseinrichtung. Mittels dieser Gestenerfassungseinrichtung kann vorteilhafterweise der Auswahl-Bedienvorgang sowie gegebenenfalls der Bildlauf-Bedienvorgang erfasst werden. Die Gestenerfassungseinrichtung ist mit der Steuervorrichtung gekoppelt und überträgt nach Erfassen eines bestimmten Bedienvorgangs ein entsprechendes Signal an die Steuervorrichtung.

Die Erfindung betrifft des Weiteren ein Fahrzeug insbesondere ein Kraftfahrzeug mit der vorstehend beschriebenen Vorrichtung.

Die Erfindung wird nun anhand von Ausführungsbeispielen mit Bezug zu den Zeichnungen erläutert.
- Figur 1: zeigt schematisch den Aufbau eines Ausführungsbeispiels der erfindungsgemäßen Vorrichtung und die Kopplung dieser Vorrichtung mit anderen Einrichtungen des Fahrzeugs,
- Figur 2: zeigt die Anordnung der Anzeigevorrichtung in einem Fahrzeug,
- Figur 3: zeigt eine Anzeige der Anzeigevorrichtung, die von einem Ausführungsbeispiel des erfindungsgemäßen Verfahrens erzeugt wurde, und
- Figur 4: zeigt eine andere Anzeige der Anzeigevorrichtung, die von einem Ausführungsbeispiel des erfindungsgemäßen Verfahrens erzeugt wurde.

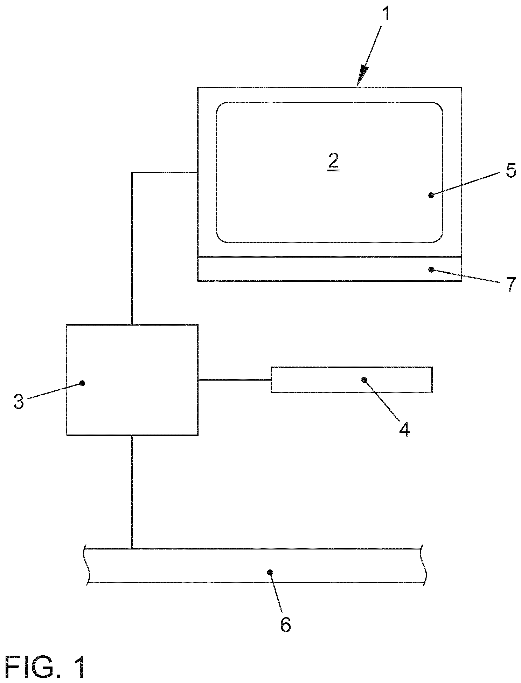

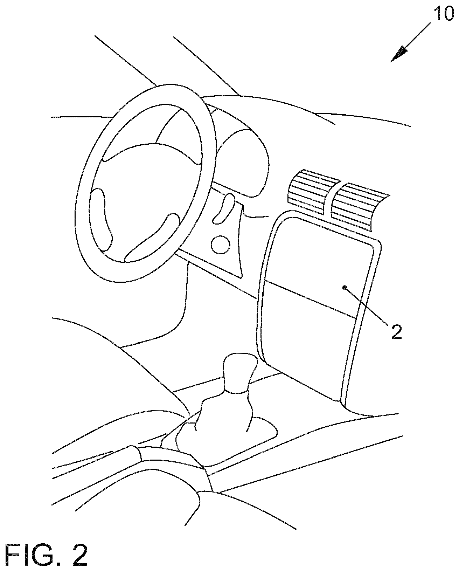

Die erfindungsgemäße Vorrichtung umfasst eine Anzeigevorrichtung 1 mit einer Anzeigefläche 2, die so im Innenraum des Fahrzeugs 10 angeordnet ist, dass sie von zumindest einem Fahrzeuginsassen, insbesondere dem Fahrer, gut sichtbar ist, wie es in den Figuren 1 und 2 gezeigt ist. Die Anzeigefläche 2 kann von einem Display, insbesondere einem Flüssigkristalldisplay, beliebiger Bauart bereitgestellt werden. Die Anzeigevorrichtung ist mit einer Steuervorrichtung 3 gekoppelt.

Die Steuervorrichtung 3 erzeugt Grafikdaten, die mittels der Anzeigevorrichtung 1 angezeigt werden können. Die Steuervorrichtung 3 ist hierfür mit einem Speicher 4 zum Speichern von Daten verbunden. Die Daten umfassen insbesondere in Listen geordnete Information. Die Liste umfasst eine Vielzahl von Listeneinträgen. Eine Teilmenge der Listeneinträge kann auf der Anzeigefläche 2 der Anzeigevorrichtung 1 mittels graphischer Objekte angezeigt werden, wie es später erläutert wird. Ferner sind in dem Speicher 4 Daten zu Funktionen gespeichert, die den graphischen Objekten bzw. den Listeneinträgen der Liste zugeordnet sind. Diese Daten können beispielsweise Steuerbefehle umfassen, welche das Ausführen einer bestimmten Funktion initiieren.

Die Steuervorrichtung 3 ist ferner Teil einer Bedieneinrichtung, die von einem Nutzer betätigbar ist, um die angezeigte Teilmenge der Liste durch einen Bedienvorgang zu verändern, eine Auswahl eines bestimmten graphischen Objekts der Liste zu treffen oder ein graphisches Objekt der Liste zu markieren. Bei dem in Figur 1 gezeigten Ausführungsbeispiel umfasst die Bedieneinrichtung eine berührungsempfindliche Oberfläche 5, welche auf der Anzeigefläche 2 ausgebildet ist. Ferner umfasst die Bedieneinrichtung eine Gestenerfassungseinrichtung 7, welche bestimmte Gesten, die ein Nutzer vor der Anzeigefläche 2 ausführt, erfasst und in Steuerbefehle umwandelt.

Alternativ kann die berührungsempfindliche Oberfläche 5 und/oder die Gestenerfassungseinrichtung 7 separat von der Anzeigefläche 2 vorgesehen sein. In diesem Fall umfasst die Bedieneinrichtung somit einen Touchpad anstatt eines Touchscreens und die Gesten werden in der Umgebung des Touchpads erfasst und nicht vor der Anzeigefläche 2.

Des Weiteren ist die Steuervorrichtung 3 mit einem Datenbus 6 des Fahrzeugs 10 gekoppelt, über welchen Daten mit vielfältigen Einrichtungen des Fahrzeugs 10 ausgetauscht werden können. Beispielsweise ist ein Navigationssystem und ein Infotainmentsystem mit dem Datenbus 6 verbunden.

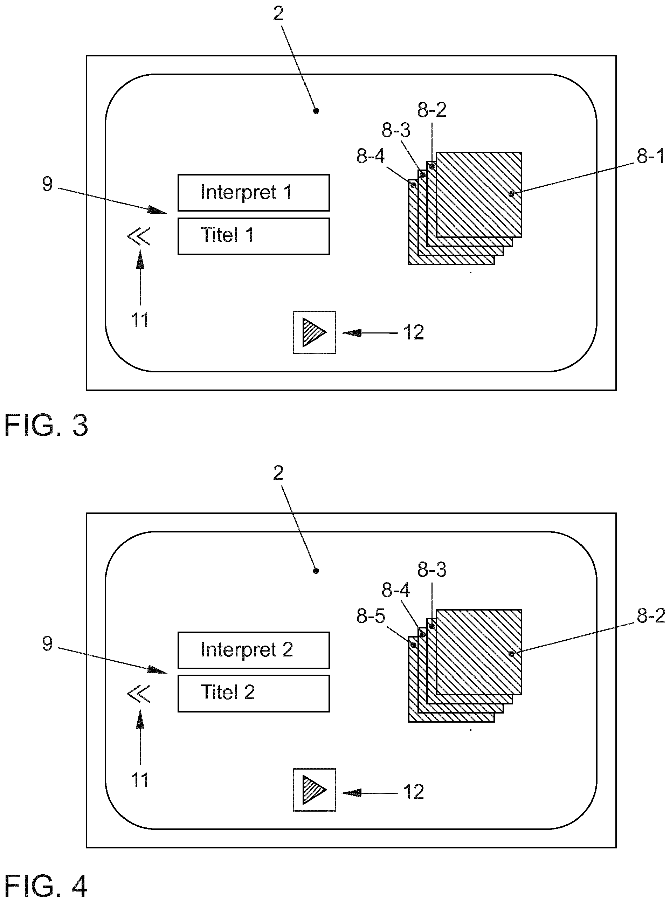

Im Folgenden wird mit Bezug zu den Figuren 3 und 4 erläutert, wie die angezeigte Teilmenge einer Liste bei einem Ausführungsbeispiel des erfindungsgemäßen Verfahrens verändert und ein graphisches Objekt dieser Liste ausgewählt werden kann. Das Verfahren kann von der vorstehend beschriebenen Vorrichtung durchgeführt werden.

Wie in Figur 3 gezeigt, werden mehrere graphische Objekte 8-1 bis 8-4 in Form eines Stapels auf der Anzeigefläche 2 dargestellt. Die graphischen Objekte 8-1 bis 8-4 werden im Folgenden auch allgemein mit dem Bezugszeichen 8 bezeichnet. Der Stapel wird so perspektivisch dargestellt, dass ein graphisches Objekt, in Figur 3 das graphische Objekt 8-1, oben auf dem Stapel vollständig sichtbar dargestellt ist und weitere graphische Objekte, bei der Darstellung der Figur 3 die graphischen Objekte 8-2 bis 8-4, perspektivisch hinter dem oben auf dem Stapel dargestellten graphischen Objekt 8-1 dargestellt werden. Die weiteren graphischen Objekte 8-2 bis 8-4 sind dabei nur teilweise sichtbar dargestellt. Man erkennt nur die Ränder dieser graphischen Objekte.

In dem in Figur 3 gezeigten Beispiel ist das oben auf dem Stapel dargestellte graphische Objekt 8-1 auch ausgewählt, das heißt in einem Zustand, bei dem die Funktion, die diesem graphischen Objekt 8-1 zugeordnet ist, ausgeführt wird. Im hier beschriebenen Beispiel sind den graphischen Objekten 8 jeweils Audiodateien zugeordnet. Bei einer Auswahl eines bestimmten graphischen Objekts 8-1 wird die zugeordnete Audiodatei von dem Infotainmentsystem des Fahrzeugs 10 abgespielt. Dies wird auf der Anzeigefläche 2 durch ein graphisches Symbol 12 visualisiert. Ferner werden zu dem ausgewählten graphischen Objekt 8-1 Zusatzinformationen 9 angezeigt. In diesem Fall sind dies alphanumerische Textdarstellungen, welche den Interpreten und den Titel der Audiodatei bezeichnen, welche dem ausgewählten graphischen Objekt 8-1 zugeordnet sind.

Den graphischen Objekte 8 können jedoch auch anderen Funktionen zugeordnet sein, wie beispielsweise Radiosender, geographische Orte als Ziele des Navigationssystems oder Betriebszustände des Fahrzeugs.

Der Nutzer hat nun die Möglichkeit die Auswahl des graphischen Objekts 8 der Liste durch einen Auswahl-Bedienvorgang zu verändern. Diese Möglichkeit wird durch ein Symbol 11, welches zwei kleine Pfeile darstellt, visualisiert. Wenn dieses Symbol 11 angezeigt wird, besteht die Möglichkeit für den Auswahl-Bedienvorgang.

In diesem Ausführungsbeispiel umfasst der Auswahl-Bedienvorgang eine Wischgeste des Nutzers. Diese Wischgeste kann auf der berührungsempfindliche Oberfläche 5 der Anzeigefläche 2 ausgeführt werden. Die Wischgeste wird in diesem Fall von der berührungsempfindlichen Oberfläche 5 erfasst. Alternativ kann die Wischgeste auch vor der Anzeigefläche 2 ausgeführt werden. In diesem Fall wird sie von der Gestenerfassungseinrichtung 7 erfasst. Bei der Wischgeste bewegt der Nutzer seine Hand oder einen Finger in eine bestimmte Richtung. Im vorliegenden Ausführungsbeispiel erfolgt die Bewegung von rechts nach links, wie es durch die beiden Pfeile des Symbols 11 angedeutet ist.

Wenn eine solche Wischgeste erfasst worden ist, erzeugt die Steuervorrichtung 3 Graphikdaten für eine Animation. Bei dieser Animation wird das graphische Objekt 8-1, welche oben auf dem Stapel angezeigt wird, in Richtung der Wischgeste, das heißt im vorliegenden Fall nach links bewegt. Dabei kann es gegebenenfalls auch perspektivisch dargestellte Dreh- oder Schwenkbewegungen ausführen. Während dieser Bewegung wird die Transparenz der Darstellung des graphischen Objekts 8-1 so verändert, dass das graphische Objekt 8-1 am Ende der Animation vollständig verschwunden ist. Wie in Figur 4 gezeigt, wird oben auf dem Stapel nun das nächste graphische Objekt 8-2 dargestellt. Dahinter, nur teilweise sichtbar, werden die bisherigen graphischen Objekte 8-3 und 8-4 dargestellt. Des Weiteren wird hinten ein weiteres graphisches Objekt 8-5 teilweise sichtbar dargestellt.

Außerdem ermittelt die Steuervorrichtung 3 durch einen Zugriff auf den Speicher 4, welche Funktion dem nun oben auf dem Stapel dargestellten graphischen Objekt 8-2 zugeordnet ist. Die Steuervorrichtung 3 versetzt dieses nun oben auf dem Stapel dargestellte graphische Objekt 8-2 in einen Auswahlzustand, das heißt es wird die Funktion ausgeführt, die diesem graphischen Objekt 8-2 zugeordnet ist. Es wird nun somit die Audiodatei von dem Infotainmentsystem wiedergegeben, die dem graphischen Objekt 8-2 zugeordnet ist. Ferner werden die Zusatzinformationen 9 mit dem entsprechenden Interpreten und dem Titel angezeigt.

Durch den Auswahl-Bedienvorgang hat der Nutzer somit eine Vielzahl von Schritten schnell und einfach vollzogen: Das Abspielen der Audiodatei, die dem graphischen Objekt 8-1 zugeordnet ist, wurde angehalten. Es wurde eine Animation erzeugt, die dem Nutzer visualisiert, dass das graphische Objekt 8-1 nun nicht mehr ausgewählt ist. Es wurde ein anderes graphisches Objekt 8-2 oben auf dem Stapel angezeigt. Die diesem graphischen Objekt 8-2 zugeordnete Audiodatei wurde gestartet und vom Infotainmentsystem abgespielt. Dies wurde durch ein graphisches Symbol 12 visualisiert.

Zusätzlich zu dem Auswahl-Bedienvorgang ist bei dem Verfahren ein Bildlauf-Bedienvorgang ausführbar. Auch der Bildlauf-Bedienvorgang wird durch eine Geste, beispielsweise eine Wischgeste initiiert. Beispielsweise kann der Nutzer eine Wischbewegung von oben nach unten oder von unten nach oben ausführen. Wird eine solche Wischgeste für einen Bildlauf-Bedienvorgang erfasst, werden von der Steuervorrichtung 3 folgende Schritte ausgeführt: Ausgehend von der Darstellung gemäß Figur 3 wird das oben auf dem Stapel dargestellt graphische Objekt 1 von dem Stapel weg bewegt. Beispielsweise erfolgt die Bewegung in Richtung der Wischgeste, das heißt nach oben oder nach unten. Während der Animation für diese Bewegung verschwindet das graphische Objekt 8-1 und es wird wie in Figur 4 gezeigt das darunterliegende graphische Objekt 8-2 auf dem Stapel dargestellt. Dieses graphische Objekt 8-2 wird in diesem Fall jedoch nicht ausgewählt sondern nur markiert. Dies bedeutet, dass zwar die Zusatzinformationen 9 zu dem graphischen Objekt 8-2 angezeigt werden, die dem graphischen Objekt 8-2 zugeordnete Audiodatei wird jedoch nicht gestartet. Abweichend von der Figur 3 wird somit nicht das Symbol 12 angezeigt, sondern ein anderes Symbol, welches darauf hinweist, dass die Audiodatei zu dem graphischen Objekt 8-2 durch einen weiteren Bedienvorgang gestartet werden kann. Das erfindungsgemäße Verfahren unterscheidet somit zwischen einer Auswahl und einer Markierung eines graphischen Objekts.

### Bezugszeichenliste

- 1: Anzeigevorrichtung
- 2: Anzeigefläche
- 3: Steuervorrichtung
- 4: Speicher
- 5: berührungsempfindliche Oberfläche
- 6: Datenbus
- 7: Gestenerfassungseinrichtung
- 8, 8-1 bis 8-5: graphische Objekte
- 9: Zusatzinformation
- 10: Fahrzeug
- 11: Symbol
- 12: Symbol

## Patentansprüche

1. Verfahren zum Auswählen eines Objekts (8) einer Liste, bei dem
- auf einer Anzeigefläche (2) eine Teilmenge einer Liste mittels graphischer Objekte (8) angezeigt wird, wobei den graphischen Objekten (8) zumindest zum Teil jeweils Funktionen zugeordnet sind,
- die Liste als Stapel dargestellt wird, bei dem ein erstes graphisches Objekt (8-1) oben auf dem Stapel vollständig sichtbar ist und weitere graphische Objekte (8-2 bis 8-4) perspektivisch hinter dem ersten graphischen Objekt (8-1) nur teilweise sichtbar dargestellt sind, und
- durch einen Auswahl-Bedienvorgang eines der weiteren graphischen Objekte (8-2 bis 8-4) ausgewählt wird, wobei,
- wenn ein Auswahl-Bedienvorgang erfasst worden ist, zumindest das erste, oben auf dem Stapel dargestellte graphische Objekt (8-1) verschwindet, so dass eines (8-2) der weiteren graphischen Objekte (8-2 bis 8-4) nach dem Verschwinden des ersten graphischen Objekts (8-1) oben auf dem Stapel dargestellt wird, und dieses graphische Objekt (8-2) automatisch ausgewählt wird, so dass die diesem graphischen Objekt (8-2) zugeordnete Funktion ausgeführt wird,
**dadurch gekennzeichnet, dass**
durch einen Bildlauf-Bedienvorgang ein anderes graphisches Objekt (8-2) oben auf dem Stapel zur Darstellung gebracht wird und nach dem Bildlauf-Bedienvorgang das oben auf dem Stapel dargestellte graphische Objekt (8-2) markiert ist, wobei bei einer Markierung eines graphischen Objekts (8) Zusatzinformationen (9) zu diesem Objekt (8) angezeigt werden, die dem Objekt (8) zugeordnete Funktion jedoch nicht ausgeführt wird, wobei
die dem markierten Objekt (8) zugeordnete Funktion durch einen weiteren Bedienvorgang ausgeführt werden kann, wobei
der Auswahl-Bedienvorgang eine Wischgeste umfasst, die eine horizontale Bewegung einer Hand oder eines Fingers eines Nutzers ist, und der Bildlauf-Bedienvorgang eine Wischgeste umfasst, bei welcher der Nutzer eine Wischbewegung von oben nach unten oder von unten nach oben ausführt.

2. Verfahren nach Anspruch 1,
**dadurch gekennzeichnet,**
**dass** der Auswahl-Bedienvorgang eine Wischgeste umfasst, die vor der Anzeigefläche (2) oder auf einer berührungsempfindlichen Oberfläche (5) der Anzeigefläche (2) ausgeführt wird.

3. Verfahren nach Anspruch 1 oder 2,
**dadurch gekennzeichnet,**
**dass**, wenn ein Auswahl-Bedienvorgang erfasst worden ist, eine Animation angezeigt wird, bei der das erste, oben auf dem Stapel dargestellte graphische Objekt (8-1) zunächst vom Stapel weg bewegt wird und dann verschwindet.

4. Verfahren nach einem der vorhergehenden Ansprüche,
**dadurch gekennzeichnet,**
**dass** die Möglichkeit des Ausführens des Auswahl-Bedienvorgangs durch ein Symbol (11), das auf der Anzeigefläche (2) dargestellt wird, signalisiert wird.

5. Vorrichtung zum Auswählen eines Objekts (8) einer Liste mit
- einer Anzeigevorrichtung (1) mit einer Anzeigefläche (2),
- einem Speicher (4) zum Speichern einer Liste, die eine Vielzahl von graphischen Objekten (8) umfasst, die zumindest zum Teil auf der Anzeigefläche (2) anzeigbar sind, und zum Speichern von Funktionen, die den graphischen Objekten (8) zugeordnet sind,
- einer Steuervorrichtung (3), die mit der Anzeigevorrichtung (1) gekoppelt ist und mit welcher die auf der Anzeigefläche (2) wiedergegebene Anzeige so steuerbar ist, dass eine Teilmenge der Liste mittels graphischer Objekte (8) anzeigbar ist, wobei die Liste als Stapel dargestellt wird, bei dem ein erstes graphisches Objekt (8-1) oben auf dem Stapel vollständig sichtbar ist und weitere graphische Objekte (8-2 bis 8-4) perspektivisch hinter dem ersten graphischen Objekt (8-1) nur teilweise sichtbar gestellt sind, und
- einer Bedieneinrichtung (5, 7), die von einem Nutzer betätigbar ist, um durch einen Auswahl-Bedienvorgang eines der weiteren graphischen Objekte (8-2 bis 8-4) auszuwählen, wobei
- die Bedieneinrichtung (5, 7) eine Gestenerfassungseinrichtung (7) umfasst, wobei
- mittels der Steuervorrichtung (3) die Anzeigefläche (2) so ansteuerbar ist, dass, wenn ein Auswahl-Bedienvorgang erfasst worden ist, zumindest das erste, oben auf dem Stapel dargestellte graphische Objekt (8-1) verschwindet, so dass eines (8-2) der weiteren graphischen Objekte (8-2 bis 8-4) nach dem Verschwinden des ersten graphischen Objekts (8-1) oben auf dem Stapel dargestellt wird, und dieses graphische Objekt (8-2) automatisch ausgewählt wird, so dass die diesem graphischen Objekt (8-2) zugeordnete Funktion ausgeführt wird
**dadurch gekennzeichnet, dass**
mittels der Steuervorrichtung (3) die Anzeigefläche (2) ferner so ansteuerbar ist, dass durch einen Bildlauf-Bedienvorgang ein anderes graphisches Objekt (8-2) oben auf dem Stapel zur Darstellung gebracht wird und nach dem Bildlauf-Bedienvorgang das oben auf dem Stapel dargestellte graphische Objekt (8-2) markiert ist, wobei bei einer Markierung eines graphischen Objekts (8) Zusatzinformationen (9) zu diesem Objekt (8) angezeigt werden, die dem Objekt (8) zugeordnete Funktion jedoch nicht ausgeführt wird, wobei
die dem markierten Objekt (8) zugeordnete Funktion durch einen weiteren Bedienvorgang ausführbar ist, wobei
der Auswahl-Bedienvorgang eine Wischgeste umfasst, die eine horizontale Bewegung der Hand oder des Fingers des Nutzers ist, und der Bildlauf-Bedienvorgang eine Wischgeste umfasst, bei welcher der Nutzer eine Wischbewegung von oben nach unten oder von unten nach oben ausführt.

6. Vorrichtung nach Anspruch 5,
**dadurch gekennzeichnet,**
**dass** die Bedieneinrichtung (5, 7) eine berührungsempfindliche Oberfläche (5) umfasst.

7. Fahrzeug (10) mit einer Vorrichtung nach Anspruch 5 oder 6.

## Claims

1. Method for selecting an object (8) from a list, in which
- a subset of a list is displayed on a display surface (2) using graphical objects (8), functions at least partially respectively being assigned to the graphical objects (8),
- the list is displayed as a stack in which a first graphical object (8-1) is completely visible at the top of the stack and further graphical objects (8-2 to 8-4) are displayed in an only partially visible manner perspectively behind the first graphical object (8-1), and
- a selection operation is used to select one of the further graphical objects (8-2 to 8-4), wherein
- if a selection operation has been detected, at least the first graphical object (8-1) displayed at the top of the stack disappears, with the result that one (8-2) of the further graphical objects (8-2 to 8-4) is displayed at the top of the stack after the first graphical object (8-1) has disappeared, and this graphical object (8-2) is automatically selected, with the result that the function assigned to this graphical object (8-2) is performed,
**characterized in that**
- another graphical object (8-2) is displayed at the top of the stack by means of a scrolling operation and the graphical object (8-2) displayed at the top of the stack is marked after the scrolling operation, wherein if a graphical object (8) is marked, additional information (9) relating to this object (8) is displayed but the function assigned to the object (8) is not performed, wherein
the function assigned to the marked object (8) can be performed by means of a further operation, wherein
the selection operation comprises a swiping gesture which is a horizontal movement of a hand or a finger of a user, and the scrolling operation comprises a swiping gesture during which the user performs a swiping movement from the top to the bottom or from the bottom to the top.

2. Method according to Claim 1, **characterized in that** the selection operation comprises a swiping gesture which is performed in front of the display surface (2) or on a touch-sensitive surface (5) of the display surface (2).

3. Method according to Claim 1 or 2, **characterized in that**, if a selection operation has been detected, an animation is displayed in which the first graphical object (8-1) displayed at the top of the stack is first of all moved away from the stack and then disappears.

4. Method according to one of the preceding claims, **characterized in that** the possibility of carrying out the selection operation is signaled by means of a symbol (11) displayed on the display surface (2).

5. Device for selecting an object (8) from a list, having
- a display device (1) with a display surface (2),
- a memory (4) for storing a list, which comprises a multiplicity of graphical objects (8) which can be at least partially displayed on the display surface (2), and for storing functions assigned to the graphical objects (8),
- a control device (3) which is coupled to the display device (1) and can be used to control the display represented on the display surface (2) in such a manner that a subset of the list can be displayed using graphical objects (8), the list being displayed as a stack in which a first graphical object (8-1) is completely visible at the top of the stack and further graphical objects (8-2 to 8-4) are displayed in an only partially visible manner perspectively behind the first graphical object (8-1), and
- an operating device (5, 7) which can be actuated by a user in order to select one of the further graphical objects (8-2 to 8-4) by means of a selection operation, wherein
- the operating device (5, 7) comprises a gesture detection device (7), wherein
- the control device (3) can be used to control the display surface (2) in such a manner that, if a selection operation has been detected, at least the first graphical object (8-1) displayed at the top of the stack disappears, with the result that one (8-2) of the further graphical objects (8-2 to 8-4) is displayed at the top of the stack after the first graphical object (8-1) has disappeared, and this graphical object (8-2) is automatically selected, with the result that the function assigned to this graphical object (8-2) is performed,
**characterized in that**
the control device (3) can also be used to control the display surface (2) in such a manner that another graphical object (8-2) is displayed at the top of the stack by means of a scrolling operation and the graphical object (8-2) displayed at the top of the stack after the scrolling operation is marked, wherein,
if a graphical object (8) is marked, additional information (9) relating to this object (8) is displayed, but the function assigned to the marked object (8) is not perfomed, wherein
the function assigned to the object (8) can be performed by means of a further operation, wherein
the selection operation comprises a swiping gesture which is a horizontal movement of the hand or finger of the user, and the scrolling operation comprises a swiping gesture during which the user performs a swiping movement from the top to the bottom or from the bottom to the top.

6. Device according to Claim 5, **characterized in that** the operating device (5, 7) comprises a touch-sensitive surface (5).

7. Vehicle (10) having a device according to Claim 5 or 6.

## Revendications

1. Procédé pour sélectionner un objet (8) d'une liste, avec lequel
- une quantité partielle d'une liste est affichée sur une surface d'affichage (2) au moyen d'objets graphiques (8), des fonctions étant respectivement associées au moins en partie aux objets graphiques (8),
- la liste est représentée sous la forme d'un empilement avec lequel un premier objet graphique (8-1) est entièrement visible au sommet de l'empilement et des objets graphiques (8-2 à 8-4) supplémentaires sont représentés en perspective seulement partiellement visibles derrière le premier objet graphique (8-1), et
- l'un des objets graphiques (8-2 à 8-4) supplémentaires est sélectionné par une opération de commande de sélection,
- lorsqu'une opération de commande de sélection a été détectée, au moins le premier objet graphique (8-1), représenté au sommet de l'empilement, disparaît de sorte que l'un (8-2) des objets graphiques (8-2 à 8-4) supplémentaires est représenté au sommet de l'empilement après la disparition du premier objet graphique (8-1), et cet objet graphique (8-2) est sélectionné automatiquement, de sorte que la fonction associée à cet objet graphique (8-2) est exécutée,
**caractérisé en ce que**
un autre objet graphique (8-2) est amené à être représenté au sommet de l'empilement par une opération de commande de défilement d'image et, après l'opération de commande de défilement d'image, l'objet graphique (8-2) représenté au sommet de l'empilement est marqué, lors d'un marquage d'un objet graphique (8), des informations supplémentaires à propos de cet objet (8) étant affichées, la fonction associé à l'objet (8) n'étant cependant pas exécutée,
la fonction associée à l'objet (8) marqué pouvant être exécutée par une opération de commande supplémentaire, l'opération de commande de sélection comprenant un geste de balayage qui est un mouvement horizontal d'une main ou d'un doigt d'un utilisateur et l'opération de commande de défilement d'image comprenant un geste de balayage par lequel l'utilisateur accomplit un mouvement de balayage du haut vers le bas ou du bas vers le haut.

2. Procédé selon la revendication 1, **caractérisé en ce que** l'opération de commande de sélection comprend un geste de balayage qui est accompli devant la surface d'affichage (2) ou sur une surface tactile (5) de la surface d'affichage (2).

3. Procédé selon la revendication 1 ou 2, **caractérisé en ce que** lorsqu'une opération de commande de sélection a été détectée, une animation est affichée lors de laquelle le premier objet graphique (8-1) représente au sommet de l'empilement est tout d'abord retiré de l'empilement et ensuite disparaît.

4. Procédé selon l'une des revendications précédentes, **caractérisé en ce que** la possibilité d'exécuter l'opération de commande de sélection est signalée par un symbole (11) qui est représenté sur la surface d'affichage (2).

5. Arrangement pour sélectionner un objet (8) d'une liste, comprenant
- un arrangement d'affichage (1) doté d'une surface d'affichage (2),
- une mémoire (4) destinée à mémoriser une liste qui comporte une pluralité d'objets graphiques (8), lesquels peuvent au moins en partie être affichés sur la surface d'affichage (2), et destinée à mémoriser des fonctions qui sont associées aux objets graphiques (8),
- un arrangement de commande (3) qui est connecté à l'arrangement d'affichage (1) et avec lequel l'affichage restitué sur la surface d'affichage (2) peut être commandé de telle sorte qu'une quantité partielle de la liste peut être affichée au moyen d'objets graphiques (8), la liste étant représentée sous la forme d'un empilement avec lequel un premier objet graphique (8-1) est entièrement visible au sommet de l'empilement et des objets graphiques (8-2 à 8-4) supplémentaires sont représentés en perspective seulement partiellement visibles derrière le premier objet graphique (8-1), et
- un dispositif d'opération (5, 7) qui peut être actionné par un utilisateur en vue de sélectionner l'un des objets graphiques (8-2 à 8-4) supplémentaires par une opération de commande de sélection,
- le dispositif d'opération (5, 7) comprenant un dispositif de détection de geste (7),
- la surface d'affichage (2) pouvant être commandée au moyen de l'arrangement de commande (3) de telle sorte que lorsqu'une opération de commande de sélection a été détectée, au moins le premier objet graphique (8-1), représenté au sommet de l'empilement, disparaît de sorte que l'un (8-2) des objets graphiques (8-2 à 8-4) supplémentaires est représenté au sommet de l'empilement après la disparition du premier objet graphique (8-1), et cet objet graphique (8-2) est sélectionné automatiquement, de sorte que la fonction associée à cet objet graphique (8-2) est exécutée,
**caractérisé en ce que**
la surface d'affichage (2) peut en outre être commandée au moyen du dispositif de commande (3) de telle sorte qu'un autre objet graphique (8-2) est amené à être représenté au sommet de l'empilement par une opération de commande de défilement d'image et, après l'opération de commande de défilement d'image, l'objet graphique (8-2) représenté au sommet de l'empilement est marqué, lors d'un marquage d'un objet graphique (8), des informations supplémentaires (9) à propos de cet objet (8) étant affichées, la fonction associé à l'objet (8) n'étant cependant pas exécutée,
la fonction associée à l'objet (8) marqué pouvant être exécutée par une opération de commande supplémentaire, l'opération de commande de sélection comprenant un geste de balayage qui est un mouvement horizontal d'une main ou d'un doigt d'un utilisateur et l'opération de commande de défilement d'image comprenant un geste de balayage par lequel l'utilisateur accomplit un mouvement de balayage du haut vers le bas ou du bas vers le haut.

6. Arrangement selon la revendication 5, **caractérisé en ce que** le dispositif d'opération (5, 7) comprend une surface tactile (5).

7. Véhicule (10) équipé d'un arrangement selon la revendication 5 ou 6.
